# EUROPEAN PATENT APPLICATION

(11) **EP 1 440 614 A1**
(43) Date of publication of application: **28.07.2004**
(21) Application number: 03001526.7
(22) Date of filing: 23.01.2003
(51) Int. Cl.: A01B 1/06

(54) **Rotary hand-held tilling and weed removing device**

(71) Applicant: Roto-Majic Inc., Dundalk, Ontario N0C 1B0 (CA)
(72) Inventor: McKill, Robert, Dundlak, Ontario N0C 1B0 (CA)
(74) Representative: Gervasi, Gemma, Dr.

(57) **Abstract**

A rotary hand-held tilling and weed removing device comprises a shaft (1); a "T" shaped handle and two lock collars and is attachable to the chuck of a power drill. The shaft (1) is provided with rotary arms which allow tilling and weed removal in very confined areas and precision control from the shaft handle adds to the ease of use. This gardening tool has a simple design and does not require blade or tiller bar replacement making it very cost effective.

## Description

### FIELD OF THE INVENTION

This invention relates to multi-purpose gardening tools of the type which are comprised of a one-piece shaft and a control handle, and particularly to such devices which are adapted to be driven by a power drill.

### BACKGROUND OF THE INVENTION

In the past, powered garden tools have been very complicated and expensive by design, not to mention bulky or heavy. These devices have gas powered engines, some have self-contained electric motors that require fuel or hydro from other sources, and some are adapted to be driven by portable power tools, such as electric power drills.

Although today's battery powered hand drills make it easier to power some garden tools, known garden tool attachments are typically only useful for a specific application. Therefore, if it is desired to perform more than one gardening task, the user must stop and change a blade or attach a different tool to the shaft before moving on to the next application.

Many of the powered garden tools known in the prior art are over engineered, costly and complicated. A significant disadvantage of some previous garden tools is that the shaft is contained in a sleeve and parts are welded or screwed to the end of the shaft. This results in high cost of manufacturing and an increased chance of breakage or malfunction.

To date, a garden tool compatible with a hand-held, portable electric power drill has not been accessible at a reasonable cost.

### SUMMARY OF THE INVENTION

The present invention overcomes the above-described problems by providing an attachment which, when secured to an electric power drill, forms a powered garden tool. The attachment, which is referred to herein as a "garden tool" and a "rotary hand-held tilling and weed removing device", comprises a rotatable shaft, one end of which attaches to a power drill chuck, and the other end of which comprises prongs which perform tilling and weed removal. The simplicity of design of the present invention allows ease of use and virtually eliminates maintenance. In particular, the present invention permits cultivation of garden plants in close proximity to one another, while standing.

Furthermore, the diverse functions of the present invention permits the user to perform a variety of tasks with a single tool, whether it be cultivation of random flowers or vegetable rows. The tool according to the invention permits a user to roto-till, aerate, mulch and weed in close proximity to all plants, walls and borders.

According to one aspect, the present invention provides a rotary hand-held tilling and weed removing device, comprising: (a) a rotatable shaft having an upper end and a lower end, the upper end being rotatably attachable to a chuck of a rotary power drill; and (b) a pair of prongs provided on the lower end of the shaft, the prongs being bent to an angular shape, wherein each prong has an upper portion, a central portion and a lower portion, with the upper portions of both prongs extending from the lower end of the shaft, and the lower portions of the prongs converging inward toward one another such that a distance between the central portions of the prongs is greater than a distance between the lower end portions of the prongs, and wherein the lower end of the shaft terminates at the upper end of the prongs.

Preferably, the prongs are formed by splitting along the center of the shaft from one end to form a split portion, and bending the split portion to form the two prongs, the split portion preferably having a length of about 3 inches. The prongs preferably each have a half-rounded outer edge 16 and a flat inside edge 17.

The device according to the invention preferably also comprises a control handle. The handle preferably has a portion extending outwardly from the shaft, and may be formed of wood or a suitable plastic such as nylon. In one preferred embodiment, the handle is T-shaped, having a first portion extending along the shaft and a second portion extending from the first portion. The shaft is received inside the first portion of the T-shaped handle and is freely rotatable therein, and the second portion is provided with a handle grip.

The handle may be either fixed against axial movement along the shaft, or may be free to slide along the shaft. In one preferred embodiment, the first portion of the control handle is releasably secured between the upper and lower ends of the shaft by a pair of lock collars.

In order to prevent slippage of the shaft relative to the power drill chuck, the upper end of the shaft is machined for non-slip attachment to the chuck of the rotary power drill.

### BRIEF DESCRIPTION OF THE DRAWINGS

The invention will now be described, by way of example only, with reference to the accompanying drawings, in which:
Figure 1 is a split length view of the steel shaft with one end divided and the prongs bent to a specific angle.
Figure 2 is a full length view of the steel shaft with a T-shaped control handle attached and the upper end inserted into the chuck of a rotary drill.
Figure 3 is a full length view of the steel shaft with an alternate control handle attached and the upper end inserted into the chuck of a rotary drill.

### DETAILED DESCRIPTION OF PREFERRED EMBODIMENTS

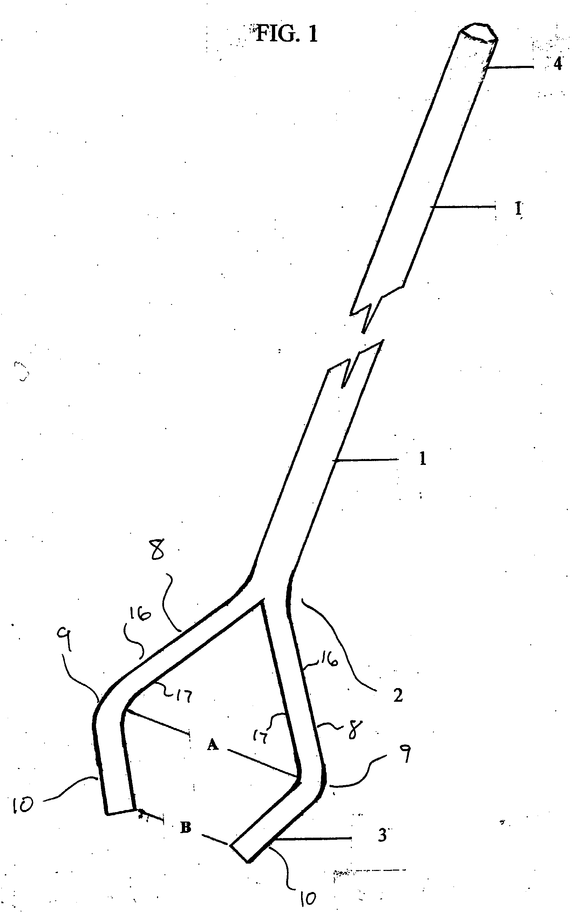

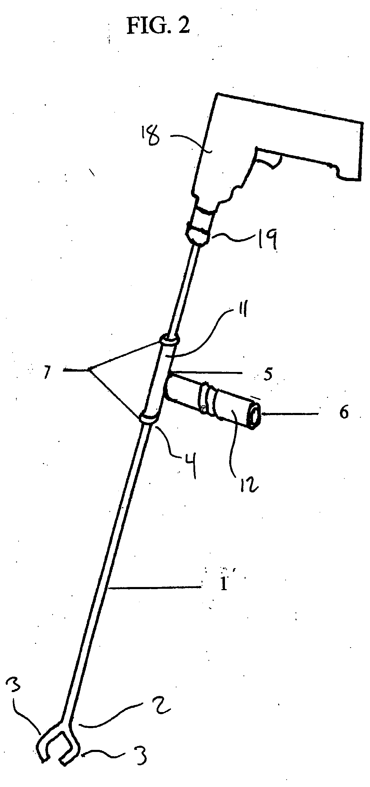

A preferred gardening tool according to a first preferred embodiment of the invention is illustrated in Figures 1 and 2. The gardening tool comprises a one piece, elongate shaft 1, preferably comprising low carbon steel and having a diameter of about 3/8 inch and a length of about 36 inches, with a particularly preferred length of shaft 1 being about 35-3/4 or 36 inches. These dimensions permit the shaft to be received in the chuck 19 of a 3/8 electric power drill 18, and permit the average user to reach the ground with the ground-working end of the device while standing and without bending.

The shaft 1 has a lower end 2 at which are formed a pair of prongs 3. Preferably, the prongs are formed by splitting the lower three inches of the shaft about three inches up its centre, and configuring the split to form the prongs 3. The outward-facing sides of prongs 3 are preferably half rounded while the inward-facing sides of prongs 3 are preferably flat. Since the prongs 3 are formed by splitting the lower end of the shaft 1, the gardening tool according to the invention has no central ground-engaging shaft which will extend into the ground during use of the tool.

The prongs are bent to an angular shape as shown in the drawings, each prong having an upper portion 8, a central portion 9, and a lower portion 10. The upper portions 8 of prongs 3 extend from the lower end 2 of shaft 1 and diverge outwardly away from one another, and the lower portions 10 of prongs 3 converge inwardly toward one another. The distance between prongs 3 is at a maximum at the central portions 9 of prongs 3, and is greater than a distance between the lower portions 10 of prongs 3. The prongs are preferably formed so as to be co-planar with one another.

In terms of preferred dimensions, the maximum distance A between the prongs (Fig. 1) at the central portions 9 is about 2-1/2 inches, with the central portions 9 preferably being spaced about two inches from the inner split of shaft 1. The lower portions 10 of prongs 3 converge inward to a minimum separation of about one inch at B (Fig. 1).

The upper end 4 of shaft 1 is stamped, machined or otherwise formed for easy non-slip attachment to the chuck of an electric power drill. Preferably, the uppermost inch of shaft 1 is provided with three or six flat sides.

Figure 2 depicts the 'T' shaped handle of the gardening tool according to the first preferred embodiment, which may preferably be formed from nylon or another suitable polymeric material. The shaft 1 rotates freely inside the vertical part 11 of the handle 5 while the horizontal part of the handle 5 is held by the user. The horizontal part of the handle 5 has a foam-rubber handle grip 6 for control and comfort. The adjustable 'T' shaped handle 5 is locked in place by two lock collars 7. These lock collars 7 may be loosened with an Allen Key and adjusted to the user's desired position of the nylon 'T' shape handle 5. Alternatively, the position of the handle 5 may be non-adjustable, preferably with a washer or the like permanently secured to the shaft 1 to act as a stop for the lower end of the vertical part 11 of handle 5.

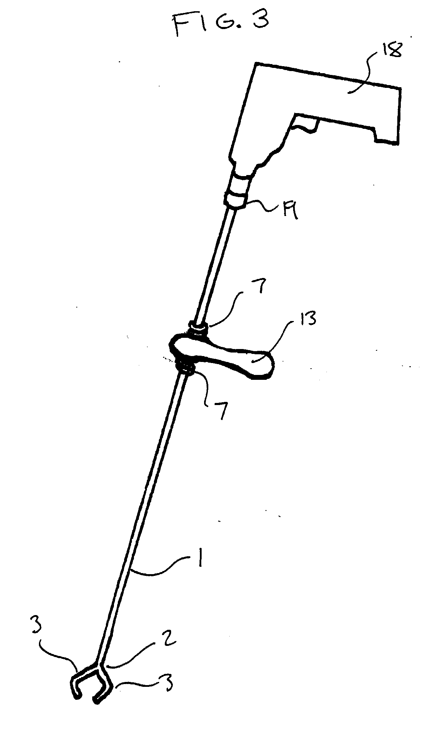

Figure 3 shows a garden tool according to a second preferred embodiment of the present invention. As in the first embodiment, this garden tool includes a shaft 1 having a pair of prongs 3. The garden tool of Figure 3 differs from that shown in Figures 1 and 2 in that it has a shaped wooden handle 13 which is apertured at one end to receive shaft 1, and which extends outwardly at about 90 degrees to the shaft. The handle 13 may preferably be comprised of hardwood or other suitable material and may for example be contoured (as shown in Fig. 3) or cylindrical with a resilient covering, to allow it to be comfortably gripped by the user. As in the first preferred embodiment, the handle 13 is preferably adjustably secured to the shaft 1 by a pair of lock collars 7. Alternatively, the position of handle 13 may preferably be non-adjustable, with a washer or the like being permanently secured to the shaft 1 to act as a lower stop for handle 13, and a lock collar preventing upward movement of the handle 13.

The key to the rotary hand-held tilling and weed removing device according to the invention is simplicity. The device contains relatively few components, namely a shaft, a handle and one or two lock collars, and is therefore very simple and light, typically weighing only about 1.5 pounds. Easily attached to the chuck of an electric power drill, the rotary arms allow tilling and weed removal in very confined areas and precision control from the shaft handle adds to the ease of use from a standing position. This simple design does not require blade or tiller bar replacement, making it very cost effective. The low carbon, one piece, steel shaft requires no maintenance.

In conclusion, the gardening tool according to the invention comprises a 3/8 inch steel shaft 36 inches in length, split and bent in a triangular direction. The simplicity of the gardening tool is such that it does not require any attachments. The control handle is adjustable to the user's height and arm length. Once the user becomes familiar with the tool, on average about one hour, the ease of operation of the garden tool will become apparent to the user. The gardening tool according to the invention is simple, light weight, performs a number of tasks, and will cut down on the time the user will require to do gardening maintenance.

Although the invention has been described with reference to certain preferred embodiments, it is not intended to be limited thereto. Rather, the invention includes all embodiments which may fall within the scope of the following claims.

## Claims

1. A rotary hand-held tilling and weed removing device, comprising:
(a) a rotatable shaft (1) having an upper end (4) and a lower end (2), the upper end (4) being attachable for rotation to a chuck of a rotary power drill; and
(b) a pair of prongs (3) provided on the lower end (2) of the shaft (1), each prong (3) having an upper portion (8), a central portion (9) and a lower portion(10), with the upper portions (8) of both prongs (3) extending from the lower end (2) of the shaft (1), **characterised in that** the prongs (3) are bent to an angular shape and the lower portions (10) of the prongs (3) converge inward toward one another such that a distance between the central portions (9) of the prongs is greater than a distance between the lower portions (10) of the prongs (3), and **in that** the lower end (2) of the shaft (1) terminates at the upper ends (8) of the prongs (3).

2. The rotary hand-held tilling and weed removing device according to claim 1, **characterised in that** the prongs (3) are formed by splitting along the center of the shaft (1) from one end (2) to form a split portion, and bending the split portion to form said two prongs (3), the split portion preferably having a length of about 3 inches.

3. The rotary hand-held tilling and weed removing device according to claim 1 or 2, **characterised in that** the prongs (3) each have a half-rounded outer edge (16) and a flat inside edge (17).

4. The rotary hand-held tilling and weed removing device according to any of claims 1 to 3, **characterised in that** the distance between the central portions (9) of the prongs (3) is about 2.5 inches.

5. The rotary hand-held tilling and weed removing device according to any of claims 1 to 4, **characterised in that** the distance between the lower portions (10) of the prongs (3) is about 1 inch.

6. The rotary hand-held tilling and weed removing device according to any of claims 1 to 5, **characterised in that** the device further comprises a control handle (5), which is preferably T-shaped, comprising a first portion (11) extending along the shaft, and a second portion (12) extending from the first portion (11), **characterised in that** the shaft (1) is received inside the first portion (11) and is freely rotatable therein, and **characterised in that** the second portion (12) is provided with a handle grip (6).

7. The rotary hand-held tilling and weed removing device according to claim 6, **characterised in that** the first portion (11) of the control handle is slidable along the shaft (1).

8. The rotary hand-held tilling and weed removing device according to claim 6, **characterised in that** the first portion (11) of the control handle (5) is releasably secured between the upper and lower ends (4,2) of the shaft (1) by a pair of lock collars (7).

9. The rotary hand-held tilling and weed removing device according to any of claims 6 to 8, **characterised in that** the handle (5) comprises nylon.

10. The rotary hand-held tilling and weed removing device according to any one of claims 1 to 9, **characterised in that** the upper end (4) of the shaft (1) is shaped for non-slip attachment to the chuck of said rotary power drill.
